# EUROPÄISCHE PATENTSCHRIFT

(11) **EP 1 428 283 B1**
(45) Veröffentlichungstag und Bekanntmachung des Hinweises auf die Patenterteilung: **05.12.2012**
(21) Anmeldenummer: 02774329.3
(22) Anmeldetag: 10.09.2002
(51) Int. Cl.: H01M 8/06, H01M 8/04

(54) **VERFAHREN UND VORRICHTUNG ZUM BETRIEB EINER BRENNSTOFFZELLE**
METHOD AND DEVICE FOR OPERATING A FUEL CELL
PROCEDE ET DISPOSITIF POUR EXPLOITER UNE PILE A COMBUSTIBLE

(30) Priorität: 21.09.2001 DE 10148888
(43) Veröffentlichungstag der Anmeldung: 16.06.2004
(73) Patentinhaber: Fraunhofer-Gesellschaft zur Förderung der angewandten Forschung e.V., 80686 München (DE); Waeschke, Ulf, 01099 Dresden (DE); Kuznecovs, Mihails, 01159 Dresden (DE); Otschik, Peter, 01728 Possendorf (DE)
(72) Erfinder: WAESCHKE, Ulf, 01099 Dresden (DE); KUZNECOVS, Mihails, 01159 Dresden (DE); OTSCHIK, Peter, 01728 Possendorf (DE)
(74) Vertreter: Rauschenbach, Marion
(86) Internationale Anmeldenummer: PCT/DE2002/003376
(87) Internationale Veröffentlichungsnummer: WO 2003/028137

(56) Entgegenhaltungen:
- WO-A-94/03937
- WO-A-97/33331
- WO-A-99/28985
- DE-A- 10 065 460
- DE-A- 19 903 353
- DE-A- 19 929 472
- WILKINSON D P ET AL: "WATER MANAGEMENT AND STACK DESIGN FOR SOLID POLYMER FUEL CELLS" JOURNAL OF POWER SOURCES, ELSEVIER SEQUOIA S.A. LAUSANNE, CH, Bd. 49, Nr. 1/3, 1. April 1994 (1994-04-01), Seiten 117-127, XP000540738 ISSN: 0378-7753

## Beschreibung

### Technisches Gebiet

Die Erfindung bezieht sich auf die Gebiete der Chemie, des Maschinenbaus und der Brennstoffzellentechnik und betrifft ein Verfahren und eine Vorrichtung zur Gasbefeuchtung, wie es insbesondere für Hochtemperaturbrennstoffzellen zur Anwendung kommen kann.

### Stand der Technik

Bei der 1842 von Sir William Grove erfundenen Brennstoffzelle haben sich im Laufe der Entwicklung fünf Haupttypen herauskristallisiert. In jüngster Zeit gilt die Hochtemperaturbrennstoffzelle (Solid Oxide Fuel Cell - SOFC) aufgrund ihres hohen Wirkungsgrades als besonders erfolgversprechend (J. Am. Ceram. Soc. 76 (3)563-88 (1993)). Derartige Hochtemperaturbrennstoffzellen sind außerdem bezüglich des zu "verbrennenden" Gases (Frischgas) wenig anspruchsvoll, weil bei ihnen Sauerstoffionen durch den zwischen den Elektroden befindlichen Festelektrolyten wandern. Dieser Sauerstoff ist in ausreichend reiner Form als Luft verfügbar, der Stickstoff stört den Prozess nicht.

Für den Übergang der Ionen an den Elektroden hat es sich als vorteilhaft erwiesen, das dort vorbeiströmende Gas zu befeuchten, d. h. ihm Wasserdampf beizumischen (DE 199 29 472 A1). Der Innenwiderstand der Zelle sinkt dadurch und es ist möglich, mehr Strom zu entnehmen. Desweiteren ist es für einen spannungsstabilen Betrieb der Brennstoffzelle sinnvoll, bereits einen Sauerstoffpartialdruck (durch thermische Dissoziation aus Wasser) auf der Gasseite zu haben, weil ansonsten sein sprunghafter Anstieg durch beginnende Wasserbildung bei Stromentnahme zu einer extremen Spannungsänderung führt.

Zur Gasbefeuchtung werden Verdampfer oder Membranbefeuchter eingesetzt, deren Arbeitsweise aber große Anforderungen an die Regelungstechik stellt (DE 199 58 179 A1, DE 199 03 353 A1). Nach DE 100 65 460 A1 kann über die Bestimmung des Widerstandes der Anodenschicht die Feuchte kontrolliert werden. In jedem Fall sind der Verbrauch an hochreinem Wasser (je kWh erzeugter Elektrizität werden 0,5 -1 I Wasser verbraucht) und die Verdampfungswärme (je Liter Wasser werden 4000 kJ Wärme für das Verdampfen und Erhitzen benötigt) nachteilig. Durch die Umsetzung des Frischgases in der Brennstoffzelle entsteht entlang der Gasströmung eine Abnahme von oxydierbaren Bestandteilen, was zu einer unerwünschten Ungleichbelastung der Zellenfläche führt. Aus diesem Grund müssen für eine deutliche Erhöhung der Gasausnutzung mehrere Brennstoffzellen mit unterschiedlichen Arbeitspunkten hintereinander geschaltet werden. Bei der Nutzung z.B. fossiler Energieträger muss ein Reformer vorgeschaltet werden, welcher Wasserdampf und Wärme verbraucht, um das Gas aufzubereiten.

Bekannt ist aus der DE 199 30 224 A1 ein Verfahren und eine Vorrichtung zum Betrieb von Brennstoffzellen, bei der die Brennstoffzuführungseinrichtung mindestens zwei Tankbehälter und eine Stelleinrichtung aufweist; die dazu ausgelegt sind, Brennstoff mit im Zeitverlauf abwechselnd erhöhter und erniedrigter Konzentration in die Brennstoff-Speisezuleitung zu führen.

In der WO 99/28985 wird ein Verfahren beschrieben, mit dessen Hilfe das Brenngas frostsicher befeuchtet werden kann. Danach wird periodisch die Strömungsrichtung des Oxidantes geändert.

Darauf aufbauend wird in der DE 199 29 472 A1 angegeben, dass die in die PEM-Brennstoffzelle einströmende Luft, die phasenweise umgekehrt wird, vor Eintritt in die Brennstoffzelle befeuchtet wird, wobei die Befeuchtung durch Zuführung eines Teils der Brennstoffzellenabluft erfolgen kann.

Das Verfahren und die Vorrichtung nach DE 199 44 541 A1 geben an, dass die Lebensdauer einer Brennstoffzelle erhöht werden kann, indem das Anodenabgas während seiner Rückführung katalytisch umgesetzt und/oder gereinigt wird.

Schließlich ist nach der US 5,169,730 eine Brennstoffzelle bekannt, bei der das entstehende Abgas teilweise über eine Düse in die Frischluftzufuhr vor der Brennstoffzelle zurückgeführt wird.

In der WO-A-94/03937 wird ein Verfahren zu Befeuchtung des Elektrolyten einer Brennstoffzelle offenbart, bei dem kathodenseitig anfallendes Abgas der Brennstoffzelle zumindest teilweise in die Kathode der Brennstoffzelle rezirkuliert wird. Dabei wird das entstehende Wasser (Produktwasser) zunächst mit dem übrigen Abgas von der Kathode der Brennstoffzelle weggeführt und dann zumindest teilweise in die Kathode der Brennstoffzelle rezirkuliert. Vorrichtungsmäßig wird dieses Verfahren durch eine Rezirkulationsleitung, die an die kathodenseitige Abgasleitung der Brennstoffzelle angeschlossen ist, realisiert, die zumindest ein Teil des kathodenseitig anfallenden Abgases in die Kathode der Brennstoffzelle rezirkuliert, wodurch es möglich wird, dass ein Teil des aus der Kathode der Brennstoffzelle ausgetragenen Wassers und der Wärme wieder in die Kathode zurückgeführt wird.

Nach WO-A-97/33331 liegt eine Brennstoffzelle vor, die einen Versorgungs- und einen Entsorgungskanal für die Medien und zwei medien-führende Elemente mit Strukturprägung aufweist, wobei die Strukturprägung eine Leitung des mit dem Reaktionsprodukt angereicherte Mediums über die Zelle für deren gleichmäßige Befeuchtung ermöglicht. Vorteilhafterweise kann dies durch eine interne Befeuchtung erfolgen, bei dem das Wasser gleichmäßig durch die Strukturprägung über die und/oder in die Nähe der trockenen Bereiche geleitet wird.

WO-A-99/28985 beschreibt eine Vorrichtung und ein Verfahren zur Befeuchtung von Brennstoffzellen, bei dem ein periodischer Wechsel der Strömungsrichtung des Oxidantenstromes durch das Oxidantenströmungsfeld realisiert wird. Dazu ist eine Wechselvorrichtung zum synchronen Wechseln der Strömungsrichtung zwischen der ersten und der zweiten Öffnung zum Oxidantenströmungsfeld vorgesehen. Bei dieser Lösung wird vorteilhafterweise ein Wasser-Recycler zwischen die Wechseleinrichtung und die beiden Öffnungen positioniert.

Weiterhin sind verschiedene Möglichkeiten zur Wasserführung in einer Polymerbrennstoffzelle bekannt (Wilkinson, D.P. u.a., J. of Power Sources 49(1994) April, Nos. 1/3, Lausanne, CH). Dabei handelt es sich ausschließlich um externe Befeuchtungsmöglichkeiten, deren Auswirkungen auf die Leistung der Polymerbrennstoffzelle untersucht werden.

### Darstellung der Erfindung

Die Aufgabe der Erfindung besteht in der Angabe eines Verfahrens und einer Vorrichtung, mit deren Hilfe die Befeuchtung des Gases in Brennstoffzellen auf einfache Weise zuverlässig erreicht wird.

Die Erfindung ist in den Hauptansprüchen angegeben. Weiterbildungen sind Gegenstand der Unteransprüche.

Erfindungsgemäß wird bei dem Verfahren zum Betrieb von Brennstoffzellen, bei dem das eingesetzte Frischgas innerhalb einer Brennstoffzelle/Brennstoffzellenverbundes in je einem gemeinsamen Raum vor und/oder nach den Gaskanälen mit dem Restgas oder Teilen des Restgases aus der Brennstoffzelle/Brennstoffzellenverbund selbst vermischt. Dazu wird eine zusätzliche Gasströmung erzeugt, welche eine Vermischung von Frischgas mit Restgas realisiert. Diese zusätzliche Gasströmung wird der Hauptgasströmung aufgeprägt und kann auch entgegen der Hauptströmungsrichtung wirken. Bei dem Restgas handelt es sich um das Gas, welches nach dem Durchlauf durch die Gaskanäle der/des Brennstoffzelle/Brennstoffzellenverbundes vorhanden ist. Vorteilhafterweise wird das Restgas aus der gleichen Brennstoffzelle/Brennstoffzellenverbund verwendet, die mit dem erfindungsgemäßen Verfahren arbeitet.

Das Gemisch wird dann in der/dem Brennstoffzelle/Brennstoffzellenverbund weiterverarbeitet.

Durch einen zusätzlichen Raum mit einem veränderlichen Volumen, welches der Hubraum eines Kolbens oder einer Membran darstellt, wird über mindestens eine der Gasleitungen, die mit einem der gemeinsamen Räume vor oder nach den Gaskanälen verbunden ist, die pulsierende überlagernde Gasströmung in den Gaskanälen und die Gaseinspeisung in die Brennstoffzelle oder den Brennstoffzellenverbund mit wechselnder Strömungsrichtung realisiert..

Besonders vorteilhaft ist das erfindungsgemäße Verfahren für den Einsatz in Hochtemperaturbrennstoffzellen.

Ebenfalls ist es vorteilhaft, wenn der im Prozeß der Energieerzeugung entstandene Wasserdampf mit seinem Wärmeinhalt als Bestandteil des Restgases zur Reformierung des Frischgases im Frischgas-Restgas-Gemisch eingesetzt wird.

Ein besonderer Vorteil des erfindungsgemäßen Verfahrens besteht darin, dass nach dem Anfahrstadium eine Geschwindigkeit der Vermischung des Frischgases mit dem Restgas und eine Geschwindigkeit des Durchströmens des Gemisches durch die Gaskanäle eingestellt werden kann, die größer ist als die Geschwindigkeit der elektrochemischen Prozesse in der Brennstoffzelle. Dadurch wird ein stationäres elektrochemisches Gleichgewicht im Elektrolyt eingestellt, wodurch eine aufwendige Steuer- und Regelungstechnik vermieden werden kann. Auch arbeitet dadurch der gesamte Prozess der Energiegewinnung stabil.

Bei dem erfindungsgemäßen Verfahren besteht in der Möglichkeit der Vermischung des Frischgases mit dem Restgas jeweils in einem Raum vor den Gaskanälen in Strömungsrichtung. In diesen gemeinsamen Raum münden üblicherweise alle Gaskanäle einer Brennstoffzelle. Dieser Raum dient zur Vermischung von Frischgas und Restgas und gewährleistet dadurch eine gleichmäßige Beaufschlagung aller Gaskanäle mit dem gleichen Frischgas-Restgas-Gemisch.

Weiterhin ist es vorteilhaft, dass bei dem erfindungsgemäßen Verfahren über die gesamte Länge der Gaskanäle eine weitgehend gleiche Konzentration des Frischgas-Restgas-Gemisches aufrechterhalten wird.

Auch kann vorteilhafterweise ein Konzentrationsgefälle gasseitig über mehrere Ebenen eines Brennstoffzellenverbundes aufgebaut werden.

Die Gaseinspeisung in die Brennstoffzelle kann vorteilhaft durch erhöhten Druck, oder durch einen wechselnden Volumenstrom durchgeführt werden. Damit wird die zusätzliche Gasströmung erreicht.

Eine besonders vorteilhafte Variante besteht in der Regelung des eingesetzten Frischgasvolumens über die resultierende Spannung der Brennstoffzelle/Brennstoffzellenverbund.

Die erfindungsgemäße Vorrichtung zum Betrieb von Brennstoffzellen besteht aus einer Brennstoffzelle mit Gaskanälen, je einem gemeinsamen Raum vor und/oder nach den Gaskanälen, wobei diese Räume mit mindestens einer Gasleitung verbunden sind, wobei in diesen Räumen die Vermischung von Frischgas und Restgas aus der Brennstoffzelle/Brennstoffzellenverbund stattfindet und das Gemisch in der/dem Brennstoffzelle/Brennstoffzellenverbund zur Weiterverarbeitung vorliegt, und aus einem zusätzlichen Raum mit einem veränderlichen Volumen, welches der Hubraum eines Kolbens oder einer Membran ist, welcher über eine der Gasleitungen mit einem der gemeinsamen Räume vor oder nach den Gaskanälen verbunden ist.

Vorteilhafterweise ist das veränderliche Volumen der Hubraum eines Kolbens.

Ebenfalls vorteithafterweise entspricht das Volumen der Gaskanäle der Brennstoffzelle/Brennstoffzellenverbundes mindestens dem Volumen eines der gemeinsamen Räume vor oder nach den Gaskanälen.

Es ist auch von Vorteil, dass die Menge an Frisch- und Restgas über Ventile steuerbar ist.

Ein weiterer Vorteil besteht darin, dass die Größe des veränderlichen Volumens und die Frequenz der Kolbenhubbewegung einstellbar ist.

Weiterhin kann vorteilhafterweise ein pulsierender Brenner eingesetzt ist.

Als Wärmepumpe einsetzbar kann die erfindungsgemäße Vorrichtung sein, wenn vorteilhafterweise die Veränderungsgeschwindigkeit des veränderlichen Volumens so eingestellt ist, dass sich in der Brennstoffzelle eine stehende Welle bildet.

Durch die Verwendung von mehreren Ebenen eines Brennstoffzellenstapels und unterschiedlich angeordnete Zu- und Ableitungen für Frischgas-Restgas-Gemische und Restgas wird eine umlaufende Strömung erzeugbar.

Durch das vorteilhafterweise unter Druck, mittels wechselndem Volumenstrom oder mittels wechselnder Strömungsrichtung eingebrachte Frischgas-Restgas-Gemisch wird eine kräftige Durchströmung der Brennstoffzelle erreicht.

Für den Fall, dass im Restgas nicht ausreichend Wasserdampf vorhanden ist, kann separat Wasserdampf zugeführt werden.

Ein besonderer Vorteil des erfindungsgemäßen Verfahrens ist, dass unabhängig von der elektrischen Last eine Konzentrationsgradient in den Gaskanälen weitgehend vermieden werden kann.

Damit ist insbesondere ein homogenes Temperaturfeld entlang der Gaskanäle realisierbar und ein Auftreten von thermomechanischen Spannungen wird minimiert.

### Weg zur Ausführung der Erfindung

Im weiteren wird die Erfindung an einem Ausführungsbeispiel näher erläutert.

### Beispiel

Eine Hochtemperaturbrennstoffzelle, bestehend aus zwei durch eine Elektrolytfolie getrennten Kanälen, einem Gas- und einem Luftkanal. Aus dem Luftkanal wandert der Sauerstoff als geladenes Teilchen (Ion) durch die Elektrolytfolie zum Gaskanal. Im Gaskanal verbinden sich Sauerstoff und Wasserstoff zu Wasserdampf. Der Gaskanal mündet auf beiden Seiten in einen gemeinsamen Raum. Diese Räume sind innerhalb der Brennstoffzelle jeweils mit einer Zu-/Ableitung verbunden. Die Zuleitung bringt über ein Ventil Frischgas in den gemeinsamen Raum vor dem Gaskanal. Die Ableitung führt Restgas ab.

Es wird nun soviel Frischgas in den gemeinsamen Raum vor dem Gaskanal geleitet, dass bei einem Strom von 5,6 A 50 % des Wasserstoffs oxydiert werden. Über das veränderliche Volumen in Form des Hubraumes eines Kolbens wird durch das Heben des Kolbens der Hauptströmungsrichtung (von der Frischgaszuleitung zur Restgasableitung) eine überlagernde Gasströmung aufgeprägt und dieses durch den Gaskanal geleitet. Dabei vermischt sich das Frischgas mit dem in dem Gaskanal befindlichen Restgas und die elektrochemischen Prozesse laufen ab. Nachdem das durch den Gaskanal hindurchgetretene Gasgemisch verarbeitet ist und sich im dem Raum nach dem Gaskanal befindet, wird es durch das Senken des Kolbens zu 90 % durch den Gaskanal zurückgezogen. Die weiteren 10 % Restgas verlassen über die Ableitung die Brennstoffzelle. Mit der Zuleitung von Frischgas wird das mit Wasserstoff und Wasserdampf beaufschlagte Restgas während des Zurückziehens gemischt und dieses Frischgas-Restgas-Gemisch wird nun durch das Heben des Kolbens über die überlagernde Gasströmung durch den Gaskanal geleitet. Diese Verfahrensabfolge wird ständig wiederholt.

Nach Abstimmung der Kolbenhubfrequenz mit der Geschwindigkeit der elektrochemischen Prozesse wird eine gleichmäßige Befeuchtung des im Gaskanal strömenden Frischgas-Restgas-Gemisches erreicht und damit eine bessere Ausnutzung des Gases ermöglicht.

Die eingesetzte Elektrolytfolie mit Anoden- und Kathodenschicht verzögert gemäß dem impedanzsspektroskopischen Befund, die Reaktion des Spannungssignals auf Änderungen der Gaskonzentration um etwa 1/10-tel Sekunde. Eine zwanzigmalige Auf- und Abbewegung des Kolbens in der Sekunde ergibt eine Arbeitsspannung von 0,7 V. Bei einer Stromentnahme von 5,6 A ist bei stationärem Betrieb eine Feuchte von 50 % im Gaskanal ermittelt worden. Bei einer Wasserstoffausnutzung von 50 % wird ein elektrischer Wirkungsgrad von 29 % erreicht.

## Patentansprüche

1. Verfahren zum Betrieb von Brennstoffzellen, bei dem das eingesetzte Frischgas innerhalb der Brennstoffzelle/Brennstoffzellenverbund in je einem gemeinsamen Raum vor und/oder nach den Gaskanälen mit dem Restgas oder Teilen des Restgases aus der Brennstoffzelle/Brennstoffzellenverbund selbst vermischt wird und das Gemisch in der/dem Brennstoffzelle/Brennstoffzellenverbund weiterverarbeitet wird, und durch einen zusätzlichen Raum mit einem veränderlichen Volumen, welches der Hubraum eines Kolbens oder einer Membran darstellt, und über mindestens eine der Gasleitungen mit einem der gemeinsamen Räume vor oder nach den Gaskanälen verbunden ist, geleitet wird, wobei eine pulsierende überlagernde Gasströmung in den Gaskanälen realisiert wird und die Gaseinspeisung in die Brennstoffzelle oder den Brennstoffzellenverbund mit wechselnder Strömungsrichtung realisiert wird.

2. Verfahren nach Anspruch 1, bei dem das Verfahren bei Hochtemperaturbrennstoffzellen eingesetzt wird.

3. Verfahren nach Anspruch 1, bei dem im Prozeß entstandener Wasserdampf und dessen Wärmeinhalt als Restgas zur Reformierung des Frischgases in der Brennstoffzelle/Brennstoffzellenverbund eingesetzt wird.

4. Verfahren nach Anspruch 1, bei dem die Geschwindigkeit der Vermischung von Frischgas und Restgas und die Geschwindigkeit des Durchströmens des Gemisches durch den oder die Gaskanäle einer Brennstoffzelle/Brennstoffzellenverbund größer ist als die Geschwindigkeit der elektrochemischen Prozesse in der Brennstoffzelle.

5. Verfahren nach Anspruch 1, bei dem die Vermischung des Frischgases mit dem Restgas innerhalb der/des Brennstoffzelle/Brennstoffzellenverbunds jeweils vor deren Gaskanälen in Strömungsrichtung durchgeführt wird.

6. Verfahren nach Anspruch 1, bei dem das Frischgas-Restgas-Gemisch über die gesamte Länge der Gaskanäle in weitgehend gleicher Konzentration aufrechterhalten wird.

7. Verfahren nach Anspruch 1, bei dem über mehrere Ebenen eines Brennstoffzellenverbundes gasseitig ein Konzentrationsgefälle aufgebaut wird.

8. Verfahren nach Anspruch 1, bei dem die Gaseinspeisung in die Brennstoffzelle mit erhöhtem Druck oder mit einem wechselnden Volumenstrom durchgeführt wird.

9. Verfahren nach Anspruch 1, bei dem das eingesetzte Frischgasvolumen über die resultierende Spannung der Brennstoffzelle/Brennstoffzellenverbund geregelt wird.

10. Vorrichtung zum Betrieb von Brennstoffzellen, bestehend aus einer Brennstoffzelle mit Gaskanälen, je einem gemeinsamen Raum vor und/oder nach den Gaskanälen, wobei diese Räume mit mindestens einer Gasleitung verbunden sind, wobei in diesen Räumen die Vermischung von Frischgas und Restgas aus der Brennstoffzelle/Brennstoffzellenverbund stattfindet und das Gemisch in der/dem Brennstoffzelle/Brennstoffzellenverbund zur Weiterverarbeitung vorliegt, und aus einem zusätzlichen Raum mit einem veränderlichen Volumen, welches der Hubraum eines Kolbens oder einer Membran ist, welcher über eine der Gasleitungen mit einem der gemeinsamen Räume vor oder nach den Gaskanälen verbunden ist.

11. Vorrichtung nach Anspruch 10, bei der das Volumen der Gaskanäle der Brennstoffzelle/Brennstoffzellenverbundes mindestens dem Volumen eines der gemeinsamen Räume vor oder nach den Gaskanälen entspricht.

12. Vorrichtung nach Anspruch 10, bei der die Menge an Frisch- und Restgas über
Ventile steuerbar ist.

13. Vorrichtung nach Anspruch 10, bei der die Größe des veränderlichen Volumens und die Frequenz der Kolbenhubbewegung einstellbar sind.

14. Vorrichtung nach Anspruch 10, bei der ein pulsierender Brenner eingesetzt ist.

15. Vorrichtung nach Anspruch 10, bei der die Veränderungsgeschwindigkeit des veränderlichen Volumens so eingestellt ist, dass sich in der Brennstoffzelle eine stehende Welle bildet.

## Claims

1. Method for operating fuel cells, in which the fresh gas used is mixed within the fuel cell/composite fuel cell structure, in each case in a common space upstream and/or downstream of the gas ducts, with the residual gas or parts of the residual gas from the fuel cell/composite fuel cell structure itself, and the mixture is processed further in the fuel cell/composite fuel cell structure and is conducted through an additional space having a variable volume constituting the volumetric displacement of a piston or of a diaphragm and is connected via at least one of the gas lines to one of the common spaces upstream or downstream of the gas ducts, a pulsating superposed gas flow being implemented in the gas ducts, and the feed of gas into the fuel cell or the composite fuel cell structure being implemented with an alternating flow direction.

2. Method according to Claim 1, in which the method is used in the case of high-temperature fuel cells.

3. Method according to Claim 1, in which water vapour obtained in the process and its heat content is used as residual gas for reforming the fresh gas in the fuel cell/composite fuel cell structure.

4. Method according to Claim 1, in which the speed of the mixing of fresh gas and residual gas and the speed at which the mixture flows through the gas duct or gas ducts of a fuel cell/composite fuel cell structure are higher than the speed of the electrochemical processes in the fuel cell.

5. Method according to Claim 1, in which the mixing of the fresh gas with the residual gas within the fuel cell/composite fuel cell structure is carried out in each case upstream of their gas ducts in the flow direction.

6. Method according to Claim 1, in which the fresh-gas/residual-gas mixture is maintained in a largely identical concentration over the entire length of the gas ducts.

7. Method according to Claim 1, in which a concentration gradient is built up on the gas side over a plurality of planes of a composite fuel cell structure.

8. Method according to Claim 1, in which the feed of gas into the fuel cell is carried out at increased pressure or with a changing volumetric flow.

9. Method according to Claim 1, in which the fresh gas volume used is regulated via the resulting voltage of the fuel cell/composite fuel cell structure.

10. Device for operating fuel cells, which consists of a fuel cell with gas ducts, in each case with a common space upstream and/or downstream of the gas ducts, this space is being connected to at least one gas line, the mixing of fresh gas and residual gas from the fuel cell/composite fuel cell structure taking place in these spaces, and the mixture being present for further processing in the fuel cell/composite fuel cell structure, and of an additional space having a variable volume which is the volumetric displacement of a piston or diaphragm which is connected via one of the gas lines to one of the common spaces upstream or downstream of the gas ducts.

11. Device according to Claim 10, in which the volume of the gas ducts of the fuel cell/composite fuel cell structure corresponds at least to the volume of one of the common spaces upstream or downstream of the gas ducts.

12. Device according to Claim 10, in which the quantity of fresh gas and residual gas can be controlled via valves.

13. Device according to Claim 10, in which the size of the variable volume and the frequency of the piston stroke movement can be set.

14. Device according to Claim 10, in which a pulsating burner is used.

15. Device according to Claim 10, in which the speed of variation of the variable volume is set such that a standing wave is formed in the fuel cell.

## Revendications

1. Procédé de conduite de cellules à combustible dans lequel
le gaz frais introduit est mélangé à l'intérieur d'une cellule à combustible ou d'un ensemble de cellules à combustible dans un espace commun situé en amont et/ou en aval des canaux à gaz avec le gaz résiduel ou des parties du gaz résiduel provenant de la cellule à combustible ou de l'ensemble de cellules à combustible,
le mélange poursuivant son traitement dans la cellule à combustible ou dans l'ensemble de cellules à combustible et étant conduit dans un espace supplémentaire doté d'un volume variable qui représente l'espace de la course d'un piston ou d'une membrane et qui est relié par au moins l'un des conduits à gaz à l'un des espaces commun situés en amont ou en aval des canaux pour gaz,
un écoulement pulsé et superposé de gaz étant réalisé dans les canaux pour gaz et l'injection de gaz dans la cellule à combustible ou l'ensemble de cellules à combustible étant réalisé dans des directions d'écoulement alternées.

2. Procédé selon la revendication 1, dans lequel le procédé est utilisé sur des cellules à combustible travaillant à haute température.

3. Procédé selon la revendication 1, dans lequel dans lequel la vapeur d'eau produite au cours du processus et son contenu thermique sont utilisés comme gaz résiduel pour le reformage du gaz frais dans la cellule à combustible ou l'ensemble de cellules à combustible.

4. Procédé selon la revendication 1, dans lequel la vitesse du mélange de gaz frais et de gaz résiduel et la vitesse de traversée du mélange dans le ou les canaux pour gaz d'une cellule à combustible ou d'un ensemble de cellules à combustible sont supérieures à la vitesse des processus électrochimiques qui ont lieu dans la cellule à combustible.

5. Procédé selon la revendication 1, dans lequel le mélange de gaz frais avec le gaz résiduel est réalisé à l'intérieur de la cellule à combustible ou de l'ensemble de cellules à combustible en amont de ses canaux pour gaz dans la direction d'écoulement.

6. Procédé selon la revendication 1, dans lequel le mélange de gaz frais et de gaz résiduel est maintenu à une concentration largement constante sur toute la longueur des canaux pour gaz.

7. Procédé selon la revendication 1, dans lequel une chute de concentration est établie dans le gaz sur différents plans d'un ensemble de cellules à combustible.

8. Procédé selon la revendication 1, dans lequel l'injection de gaz dans la cellule à combustible est réalisée à une pression plus élevée ou dans un écoulement volumique alterné.

9. Procédé selon la revendication 1, dans lequel le volume de gaz frais introduit est régulé par l'intermédiaire de la tension électrique résultante de la cellule à combustible ou de l'ensemble de cellules à combustible.

10. Dispositif de conduite de cellules à combustible, constitué
d'une cellule à combustible dotée de canaux pour gaz,
d'un espace commun situé en amont et/ou en aval des canaux pour gaz, ces espaces étant reliés à au moins un conduit de gaz,
le mélange de gaz frais et de gaz résiduel provenant de la cellule à combustible ou de l'ensemble de cellules à combustible étant réalisé dans ces espaces et le mélange pouvant poursuivre son traitement dans la cellule à combustible ou l'ensemble de cellules à combustible,
le dispositif comportant un espace supplémentaire de volume variable qui est le volume de la course d'un piston ou d'une membrane et qui est relié par l'un des conduits de gaz à l'un des espaces commun situé en amont ou en aval des canaux pour gaz.

11. Dispositif selon la revendication 10, dans lequel le volume des canaux pour gaz de la cellule à combustible ou de l'ensemble de cellules à combustible correspond au moins au volume de l'un des espaces commun situé en amont ou en aval des canaux pour gaz.

12. Dispositif selon la revendication 10, dans lequel les débits de gaz frais et de gaz résiduel peuvent être commandés par des soupapes.

13. Dispositif selon la revendication 10, dans lequel la taille du volume variable et la fréquence du déplacement de course du piston peuvent être réglés.

14. Dispositif selon la revendication 10, qui utilise un brûleur pulsé.

15. Dispositif selon la revendication 10, dans lequel la vitesse de modification du volume variable est ajustée de manière à former une onde stationnaire dans la cellule à combustible.
